(19) Europäisches Patentamt
European Patent Office
Office européen des brevets

(11) Veröffentlichungsnummer : **0 517 665 A1**

## (12) EUROPÄISCHE PATENTANMELDUNG

(21) Anmeldenummer : **92810412.4**

(51) Int. Cl.⁵ : **F16B 31/02**

(22) Anmeldetag : **27.05.92**

(30) Priorität : **06.06.91 CH 1688/91**

(43) Veröffentlichungstag der Anmeldung :
**09.12.92 Patentblatt 92/50**

(84) Benannte Vertragsstaaten :
**AT CH DE FR GB IT LI**

(71) Anmelder : **MASCHINENFABRIK RIETER AG**
**CH-8406 Winterthur (CH)**

(72) Erfinder : **Widmer, Alfred**
**Oberseenerstrasse 24**
**CH-8405 Winterthur (CH)**

(54) **Spannvorrichtung.**

(57)  Eine Schraube bzw. eine Mutter (34) hat ein
darin eingebautes Kupplungsmittel (38), welches die Uebertragung der Anziehungskräfte
beim Ueberschreiten eines vorbestimmten
Drehmomentes unterbricht.

Fig.5

EP 0 517 665 A1

Die Erfindung bezieht sich auf ein Element zur Verwendung in einer Vorrichtung, die durch Drehen des Elementes um eine vorbestimmte Achse eingestellt bzw. betätigt werden kann. Ein Beispiel einer solchen Vorrichtung ist eine Spannvorrichtung für ein Werkstück zur Bearbeitung auf einer Werkzeugmaschine. Die Spannvorrichtung kann durch Drehen des Elementes angezogen werden.

## Stand der Technik

Es ist im Zusammenhang mit flexiblen Fertigungssystemen bekannt, Werkstücke auf jeweiligen gegenüber einer Werkzeugmaschine bewegbaren Träger fest zu verbinden und die Träger sequentiell nach einem Steuerungsprogramm in eine Arbeitsposition der Werkzeugmaschine zu bewegen, wo ihre jeweiligen Werkstücke je nach einem für dieses Werkstück vorgegebenen Programm bearbeitet werden. Die Genauigkeit der Bearbeitung hängt natürlich von der Genauigkeit der Bewegungen des Werkstücktransportsystems und der Elemente des Bearbeitungszentrums ab. Diese Bewegungen sind aber innerhalb durch die Konstruktion vorgegebene Toleranz beherrschbar (wiederholbar).

Die Genauigkeit der Bearbeitung hängt aber genauso von der Genauigkeit der Positionierung jedes Werkstückes auf seinem Träger ab. Der Systemkonstrukteur kann in diesem Zusammenhang Vorschriften festlegen, er kann aber durch seine Konstruktion nicht absichern, dass die Vorschriften eingehalten werden.

Es ist seit Jahrzehnten in der normalen Praxis üblich, Werkstücke während der Bearbeitung gegenüber ihren Trägern durch Spannvorrichtungen festzuhalten. Diese Spannvorrichtungen umfassen normalerweise einen mit einem Gewinde versehenen Bolzen und eine Mutter. Die Spannvorrichtung wird angezogen bzw. gelockert durch Drehen der Mutter auf dem Bolzen. Die vorerwähnten Vorschriften legen normalerweise ein maximales Drehmoment fest, wobei das Ueberschreiten dieser oberen Drehmomentgrenze zu einem Verspannen des Werkstückes und dadurch zu Ausschuss führen kann. Das Ueberschreiten des vorgesehenen maximalen Drehmomentes führt auch früher oder später zur Zerstörung der Spannvorrichtung bzw. Teile davon, was erhebliche Zusatzkosten (Wartung, Ersatzteile) verursachen kann.

Zum Einhalten der Vorschriften bezüglich dem maximalen Drehmoment ist es allgemein üblich, die Verwendung eines "Drehmomentschlüssels" vorzusehen. Dies ist ein preiswertes und in der Praxis bestens bekanntes Handwerkzeug, welches das über ihn auf einer Mutter ausgeübte Drehmoment nach oben begrenzt. Wenn dieses Werkzeug vorschriftsmässig benutzt wird, entstehen keinerlei Probleme. Aber eben, wenn .........

## Die Erfindung

Die Erfindung sieht ein Element vor, das in einer Vorrichtung Verwendung findet, die durch Drehen des Elementes um eine vorbestimmte Achse eingestellt bzw. betätigt werden kann. Das Element ist dadurch gekennzeichnet, dass es mindestens zwei Teile umfasst, die einander gegenüber um eine vorgegebenen Achse (der "Drehachse") drehbar sind, und ein Kupplungsmittel, das in einem ersten Zustand die Teile derart miteinander verbindet, dass eine relative Drehbewegung der Teile um die Drehachse unterbunden wird, und in einem zweiten Zustand eine relative Drehbewegung der Teile um die Drehachse ermöglicht, wobei das Kupplungsmittel seinen ersten Zustand nur dann einhalten kann, wenn ein auf die Teile einwirkendes Drehmoment innerhalb eines vorgegebenen Bereiches (z.B. unterhalb eines vorgegebenen Maximalwertes) liegt. Das Element ist aber vorzugsweise derart angeordnet, dass die Begrenzung des zulässigen Drehmomentes nur für relative Drehbewegungen in einer Drehrichtung gilt.

Der eine Teil kann mit einem Gewinde versehen werden, wobei die Drehachse des Elementes dann vorzugsweise mit der Längsachse des einen Teils fluchtet.

Das Kupplungsmittel umfasst vorzugsweise ein kraftspeicherndes Mittel (z.B. ein Federpaket), welches Kontaktflächen der Teile der Drehachse entlang aneinander drückt. Die Kontaktflächen können als Reibflächen ausgeführt werden, so dass für Drehmomente innerhalb des vorgegebenen Bereiches in einer vorgegebenen Drehrichtung diese Flächen eine kraftschlüssige Verbindung zwischen den Teilen bilden.

Die Reibflächen können auf je einem Zahnkranz vorgesehen werden und zwar auf Zahnflanken, die gegenüber der durch die Drehachse gegebene Längsrichtung des Elementes schräg stehen. Jeder Zahnkranz umfasst aber vorzugsweise auch Zahnflanken, die sich in der Längsrichtung erstrecken und für Drehmomente in der entgegengesetzten Drehrichtung eine formschlüssige Verbindung zwischen den Teilen bilden.

Beispielhafte Ausführungen der Erfindung wird nun anhand der Zeichnungen näher erläutert.

Es zeigt:

Fig. 1 eine schematische Darstellung eines Bearbeitungszen trums mit einem automatischen Werkstücktransportsystem,

Fig. 2 eine schematische Darstellung einer Werkstückhalte-vorrichtung für ein System nach Fig. 1,

Fig. 3 eine perspektivische Darstellung eines ersten Teiles von einem Element nach dieser Erfindung,

Fig. 4 eine perspektivische Darstellung eines zweiten Teiles vom gleichen Element,

Fig. 5 eine perspektivische Darstellung des zusammengebauten Elementes, und

Fig. 6 ein Detail der Teile nach Fig. 3 und 4.

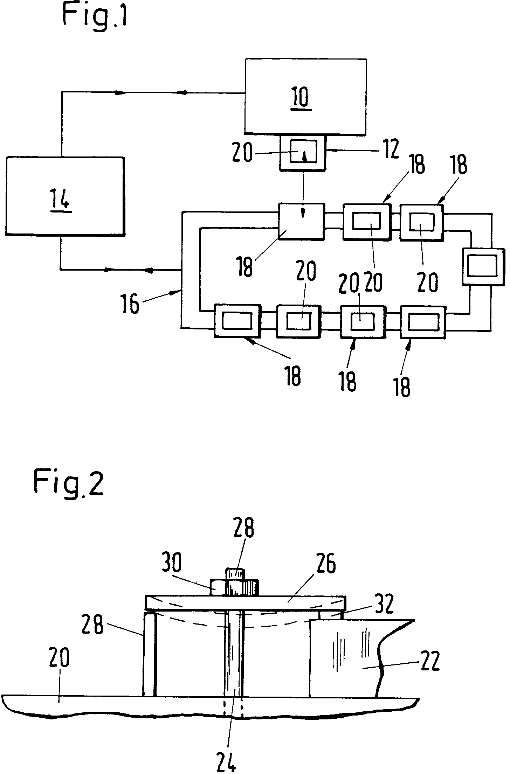

Figur 1 zeigt schematisch eine Werkzeugmaschine (Bearbeitungszentrum) 10 mit einer Arbeitsposition 12 und eine speicherprogrammierbare Steuerung 14. Das flexible Fertigungssystem umfasst auch eine endlose Transportbahn 16 mit Schlitten bzw. Wagen ("Wagen"), die im Gegenuhrzeigersinn der Bahn 16 entlang gemäss Steuerbefehle von der Steuerung 14 bewegbar sind. Jeder Wagen hat eine Plattform 20, die als Werkstückträger dient, wie nachfolgend näher beschrieben wird.

Jede Plattform 20 ist übertragbar zwischen ihrem Wagen 18 und der Arbeitsposition 12, wenn der Wagen 18 einer vorbestimmten Stelle der Bahn 16 entlang erreicht hat. Da diese Uebertragung für die Erfindung keine Bedeutung hat, ist sie in Fig. 1 nur durch einen Doppelpfeil angedeutet. An weiteren, vom Bearbeitungszentrum entfernten Stellen, können Wagen bedient werden, indem bearbeitete Werkstücke entfernt und durch noch zu bearbeitende Werkstücke ersetzt werden.

Die Genauigkeit der Bearbeitung ist im wesentlichen von der Positionierung des Werkstückes gegenüber der Arbeitsstelle 12 abhängig. Sofern dies durch die Toleranzen der Plattform bzw. des Uebertragungsmittels bestimmt wird, kann der Systemkonstrukteur seine Konstruktion der erforderlichen Genauigkeit anpassen. Sofern die Genauigkeit von der Positionierung des Werkstückes gegenüber seiner Trägerplattform abhängig ist, bedeutet dies eine Abhängigkeit von der Bedienung.

Fig. 2 zeigt schematisch eine allgemein übliche Vorrichtung zum Festhalten eines Werkstückes 22 auf seiner Trägerplattform 20 (beide nur teilweise abgebildet). Die Plattform 20 ist z.B. mit senkrecht stehenden Bolzen 24 versehen, wobei nur ein Bolzen 24 in Fig. 2 gezeigt ist. Jeder Bolzen 24 erstreckt sich durch eine Oeffnung (nicht gezeigt) in einer Lasche 26, die als "Brücke" zwischen einer Randpartie des Werkstückes 22 und einer Wand 28 ausgeführt ist. Das von der Lasche 26 hervorstehende Ende 28 des Bolzens 24 ist mit einem Aussengewinde (nicht gezeigt) versehen und arbeitet mit einer Mutter 30 zusammen. Durch eine Bewegung der Mutter 30 in Richtung des Trägers 20 dem Bolzen 24 entlang wird ein Knopf 32 auf der Lasche 26 fest gegen das Werkstück 22 gedruckt, was das Werkstück fest mit der Trägerplattform 20 verbindet.

Der Konstrukteur des Systems schreibt normalerweise ein maximales Drehmoment vor, die auf die Mutter ausgeübt werden sollte, was sich dann in einer auf der Lasche ausgeübten Kraft ausdrückt. Falls das effektive Drehmoment oberhalb des vorgesehenen Wertes liegt, ergibt dies bei erheblichem Ueberschreiten eine Verbiegung der Lasche (gestrichelt angedeutet) und (noch schlimmer) eine Verspannung des Werkstükkes. Letzteres Resultat führt meistens zum Durchfallen des bearbeiteten Werkstückes bei der Qualitätskontrolle. Als kleinstes Uebel kommt es auch vor, dass die Mutter 30 beim ständigen Ueberanziehen abgenutzt wird, was zu noch grösseren Anstrengungen führen kann, die Spannvorrichtung "fest" anzuziehen.

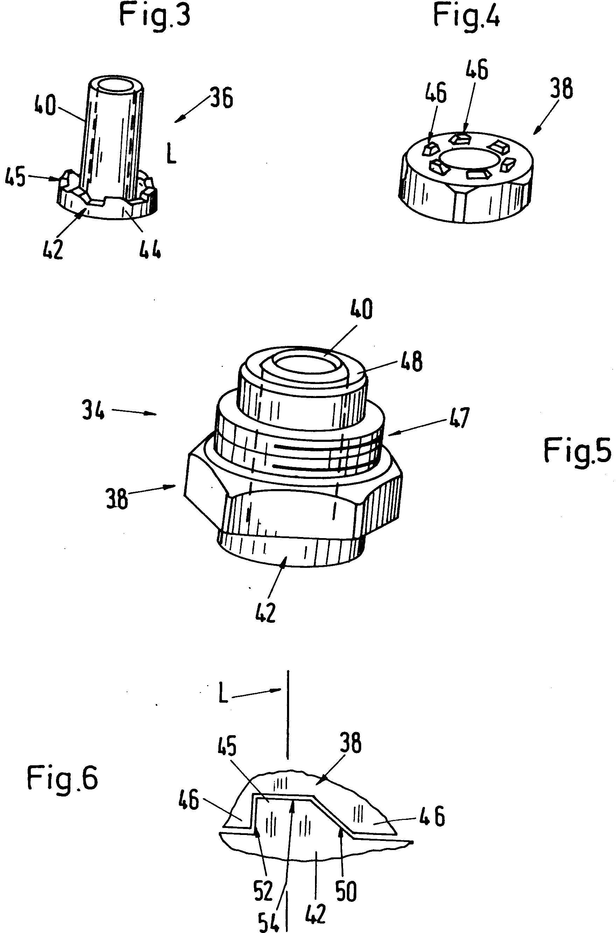

Das in den Figuren 3 bis 6 gezeigte Element soll hier Abhilfe schaffen. Statt eine drehmomentabhängige Verbindung (Kupplung) im Schlüssel (Handwerkzeug) vorzusehen, wird diese Verbindung nun im neuen Element in der Spannvorrichtung integriert. Es wird dadurch unerheblich, ob der "richtige" Drehmomentschlüssel benutzt wird, oder nicht.

Das Element 34 (Fig. 5) umfasst grundsätzlich zwei Teile 36 (Fig. 3) und 38 (Fig. 4). Der Teil 36 umfasst ein Röhrchen 40 mit einem Innengewinde (nicht gezeigt), das mit dem vorerwähnten Aussengewinde (nicht gezeigt) auf den Bolzen 24 zusammenarbeitet. An einem Ende hat das Röhrchen einen ringförmigen Flansch 42. Da die äussere Fläche 44 dieses Flansches zylindrisch ist, kann kein Drehmoment mittels eines normalen Schraubenschlüssels auf diesen Flansch erzeugt werden. Der Flansch 42 hat einen durch Zähne 45 gebildeten Zahnkranz. Das Röhrchen 40 hat am oberen Ende ein Gewinde, auf welches der Teil 48 geschraubt wrden kann.

Der zweite Teil 38 (Fig. 4) hat die äussere Form einer sechskantigen Mutter, ist aber ohne ein Innengewinde ausgeführt. Die zylindrische Innenfläche des Teils 38 passt zur zylindrischen Aussenfläche des Röhrchens 40, so dass der Teil 38 als ein Bund um das Röhrchen montiert werden kann (Fig.5). Der Teil wird vom Röhrchen geführt ohne Behinderung der relativen Beweglichkeit zwischen dem Röhrchen und dem Bund sowohl um die Längsachse des Röhrchens als auch dieser Längsachse entlang (Passfit).

Der Teil 38 ist auch mit Zähnen 46 versehen, die einen Zahnkranz an einer Stirnfläche des Teiles bilden. Der Teil 38 wird derart auf dem Röhrchen geführt, dass die Zahnkränze des Teils 38 und des Flansches 42 sich gegenüberstehen. Die beiden Zahnkränze sind derart gebildet, dass sie ineinander einrasten können.

Das Element 34 (Fig. 5) umfasst weiter ein Federpaket (Tellerfeder) 47 und einen Ring 48, der auf dem vom Flansch 42 entfernten Ende des Röhrchens 40 geschraubt wird und dann befestigt wird z.B. verstiftet oder geklebt. Das Federpaket 47 wird dadurch zwischen dem auf dem Röhrchen festgeschraubten Ring 48 und dem Teil 38 zusammengedrückt und übt eine entsprechende Kraft auf dem auf dem Röhrchen frei beweglichen Teil 38 aus, welche den Zahnkranz auf den Teil 38 gegen den Zahnkranz auf den Flansch 42 drückt. Diese Kraft ist durch die Auswahl der Feder-Charakteristik des Federpaketes 47 in engeren Toleranzgrenzen festlegbar, und kann durch entsprechendes Anziehen des Ringes 48 eingestellt werden.

Die Zähne 45,46 sind zu einem grösseren Massstab in Fig. 6 abgebildet, wobei die Abbildung insofern bewusst verfälscht ist, als das zwischen den Zahnkränzen vorhandene Spiel, zwecks deutlicher Darstellung der Zahnformen, weit übertrieben wurde. Da die Zahnformen eigentlich praktisch identisch sind, wird nur der Zahn 45 näher beschrieben und die gleichen Bezugszeichen deuten dann auf entsprechenden Flächen eines Zahns 46.

Jeder Zahn hat eine erste Flanke 50 und eine zweite Flanke 52, die je mit der Stirnseite 54 des Zahns zusammenlaufen. Die "Längsrichtung" des Elementes (parallel mit der Längsachse des Röhrchens 40) ist mit L angedeutet. Die Flanke 52 erstreckt sich in der (parallel mit der) Längsrichtung L, die Flanke 50 ist gegenüber der Längsrichtung L schräg angeordnet und die Längsrichtung L steht senkrecht zur Stirnseite 54. Die Zahnkränze sind derart angeordnet, dass beim Einrasten eines Kranzes in den anderen, die Flanken 50 sich gegenseitig berühren.

Es wird nun angenommen, man versuche die Zähne 46 in Fig. 6 nach rechts gegenüber der Zähne 45 zu bewegen, d.h. man versuche im Element nach Fig. 5 den Teil 38 im Gegenuhrzeigersinn relativ zum Flansch 42 zu drehen. Die Flanken 52 stossen aber dann sofort gegeneinander, wenn sie nicht von vornherein miteinander in Berührung stehen, so dass die relative Drehung unmöglich ist (formschlüssige Verbindung des Teils 38 mit dem Teil 36). Der Teil 36 dreht daher im Gegenuhrzeigersinn um die eigene Längsachse. Beim Verwenden des Elementes 34, anstelle der Mutter 30 (Fig. 2) bewirkt dies eine Lockerung der Spannvorrichtung.

Versuche man hingegen, die Zähne 46 in Fig. 6 nach links relativ zum Zahn 45 zu bewegen, was eine Drehung des Teils 38 (Fig. 5) im Uhrzeigersinn gegenüber dem Flansch 42 entspräche, ist eine Relativbewegung des Teils 38 gegenüber dem Teil 42 nur dann möglich, wenn das vorgeschriebene Drehmoment überschritten wird. Für Drehmomente unterhalb des eingestellten Maximalwertes, sind die Flanken 50, derart gegeneinander gepresst, dass diese Flanken nicht aufeinander "reiten" können - es besteht eine kraftschlüssige Verbindung des Teils 38 mit dem Teil 36. Ob im Einzelfall diese kraftschlüssige Verbindung besteht oder nicht, hängt vom Verhältnis der vom Federpaket 47 auf dem Teil 38 ausgeübte Kraft und dem auf Teil 38 eingeleiteten Drehmoment ab.

Solange das Element 34 sich im wesentlichen ungehindert dem Bolzen 24 (Fig. 2) entlang bewegen kann, muss im Teil 38 praktisch kein Drehmoment eingeleitet werden. Die Teile 36,38 drehen gemeinsam um die Längsachse des Bolzens. Sobald aber der Flansch 42 gegen die Lasche 26 stösst, steigt das in Teil 38 einzuleitende Drehmoment an.

Nach Ueberschreiten des maximalen Drehmomentes wird die kraftschlüssige Verbindung zwischen den Teilen 36,38 aufgehoben, so dass die Flanken 50 aufeinander gleiten, was die Zähne 46 aus dem Eingriff in den Zähnen 45 bringt. Das effektive, auf den Teil 36 ausgeübte Drehmoment ist daher durch die vom Federpaket 47 erzeugte Kraft begrenzt, obwohl der auf den Teil 38 ausgeübte Drehmoment viel höher sein kann.

## Patentansprüche

1. Ein Element, das in einer Vorrichtung Verwendung findet, die durch Drehen des Elementes um einer vorbestimmten Achse eingestellt werden kann, dadurch gekennzeichnet, dass das Element mindestens zwei Teile (36,38) umfasst, die einander gegenüber um eine vorgegebene Achse (der "Drehachse") drehbar sind, und mit einem Kupplungsmittel (42,45,46,47) versehen ist, das in einem ersten Zustand die Teile derart miteinander verbindet, dass eine relative Drehbewegung der Teile um die Drehachse unterbunden wird, und in einem zweiten Zustand eine relative Drehbewegung der Teile um die Drehachse ermöglicht, wobei das Kupplungsmittel seinen ersten Zustand nur dann einhalten kann, wenn ein auf das Element wirkendes Drehmoment innerhalb eines vorgegebenen Bereiches (z.B. unterhalb eines vorgegebenen Maximalwertes) liegt.

2. Ein Element nach Anspruch 1, dadurch gekennzeichnet, dass die Anordnung derart getroffen ist, dass die Begrenzung des zulässigen Drehmomentes nur für relative Drehbewegungen in einer Drehrichtung gilt.

3. Ein Element nach Anspruch 1 oder 2, dadurch gekennzeichnet, dass der eine Teil (36) mit einem Gewinde versehen ist, wobei die Drehachse des Elementes mit der Längsachse der Gewinde fluchtet.

4. Ein Element nach einem der vorangehenden Ansprüche, dadurch gekennzeichnet, dass das Kupplungsmittel ein kraftspeicherndes Mittel (47) umfasst, welches Berührungsflächen (50) der Teile (36,38) aneinanderdrückt.

5. Ein Element nach Anspruch 4, dadurch gekennzeichnet, dass die Kontaktflächen (50) als Reibflächen ausgeführt sind, so dass bis zu einem maximalen Drehmoment in einer vorgegebenen Drehrichtung diese Flächen (50) eine kraftschlüssige Verbindung zwischen den Teilen bilden.

6. Ein Element nach Anspruch 5, dadurch gekennzeichnet, dass die Reibflächen auf je einem Zahnkranz vorgesehen sind.

7. Ein Element nach Anspruch 6, dadurch gekennzeichnet, dass jeder Zahnkranz auch Zahnflanken (52) umfasst, die sich in der Längsrichtung erstrecken und für Drehmomente in der entgegengesetzten Drehrichtung eine formschlüssige Verbindung zwischen den Teilen bilden, wenn sie gegenseitig in Berührung stehen.

# Fig.1

# Fig.2

Fig.3

40

36

L

45

42    44

Fig.4

46

46

38

40

48

34

47

38

Fig.5

42

L

Fig.6

45

38

46

46

52    50

54   42

**Europäisches Patentamt**

# EUROPÄISCHER RECHERCHENBERICHT

Nummer der Anmeldung

EP 92 81 0412

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-1 144 465 (NORMAN NEHEMIAH RUBIN) <br> * das ganze Dokument * <br> --- | 1-7 | F16B31/02 |
| A | US-A-5 020 949 (EUGENE P. DAVIDSON; ALEGRA P. DAVIDSON) <br> * Zusammenfassung; Abbildungen * <br> --- | 1-7 | |
| A | US-A-4 692 075 (JOSEPH R. METZ) <br><br> ----- | | |

RECHERCHIERTE SACHGEBIETE (Int. Cl.5 )

F16B

Der vorliegende Recherchenbericht wurde für alle Patentansprüche erstellt

| Recherchenort | Abschlußdatum der Recherche | Prüfer |
|---|---|---|
| DEN HAAG | 14 SEPTEMBER 1992 | ARESO Y SALINAS |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)